# EUROPÄISCHE PATENTSCHRIFT

(11) **EP 3 093 516 B1**
(45) Veröffentlichungstag und Bekanntmachung des Hinweises auf die Patenterteilung: **18.04.2018**
(21) Anmeldenummer: 16001029.4
(22) Anmeldetag: 31.08.2011
(51) Int. Cl.: F16D 3/12, F16D 1/10

(54) **VERSPANNANORDNUNG FÜR EINEN ANTRIEBSSTRANG EINES KRAFTFAHRZEUGS**
BRACING ASSEMBLY FOR A DRIVE TRAIN OF A MOTOR VEHICLE
SYSTEME DE SERRAGE POUR UNE CHAINE CINEMATIQUE D'UN VEHICULE AUTOMOBILE

(30) Priorität: 09.09.2010 DE 102010044884
(43) Veröffentlichungstag der Anmeldung: 16.11.2016
(62) Teilanmeldung aus: 11787586.4
(73) Patentinhaber: Schaeffler Technologies AG & Co. KG, 91074 Herzogenaurach (DE)
(72) Erfinder: Schwederle, Philippe, 67000 Strasbourg (FR); Janz, Thomas, 77815 Bühl (DE); Horstmann, Jens, 77830 Bühlertal (DE); Mende, Hartmut, 77815 Bühl (DE)

(56) Entgegenhaltungen:
- EP-A2- 1 845 273
- WO-A1-2008/046379
- WO-A2-2007/000151
- DE-A1-102009 030 975
- FR-A1- 2 918 727

## Beschreibung

Die Erfindung betrifft eine Verspannanordnung für einen Antriebsstrang eines Kraftfahrzeugs, mit dessen Hilfe eine Steckverbindung zwischen einer getriebeseitigen Untereinheit, beispielsweise eine Doppelkupplung, mit einer motorseitigen Untereinheit, beispielsweise ein Zweimassenschwungrad, in Umfangsrichtung spielfrei vorgespannt werden kann, um Geräuschentwicklungen bei Lastwechseln zu vermeiden.

Aus WO 2007/000151 A2 ist eine Verspannanordnung bekannt, bei der ein Zweimassenschwungrad über eine Steckverzahnung mit einer Doppelkupplung drehfest aber axial verschiebbar verbunden ist, wobei ein Ausgangsflansch des Zweimassenschwungrads über eine zahnförmige Profilierung in ein korrespondierendes Gegenprofil eines Eingangsflanschs der Doppelkupplung verbunden ist. Um Geräuschentwicklungen bei Lastwechseln zu vermeiden ist der Ausgangsflansch des Zweimassenschwungrads über eine Bogenfeder mit einem Verspannblech gekoppelt, das eine abstehende U-förmige Befestigungslasche aufweist, die über ihr offenes Ende einen Zahn der Zahnprofilierung des Ausgangsflansch in Umfangsrichtung umgreifen kann. Durch die U-förmige Ausgestaltung der Befestigungslasche kann die axiale Position des Verspannblechs relativ zum Ausgangsflansch des Zweimassenschwungrads definiert werden, wobei gleichzeitig die Basis der U-förmigen Befestigungslasche von der Bogenfeder mit Vorspannung von dem umgriffenen Zahn des Ausgangsflanschs weggedrückt werden kann, um ein Spiel in Umfangsrichtung auszugleichen.

WO 2007/000151 A2 offenbart den Oberbegriff von Anspruch 1. Es besteht ein ständiges Bedürfnis für unterschiedliche Antriebsstränge alternative Verspannanordnungen vorsehen zu können, um unterschiedlichen Bauraumanforderungen begegnen zu können.

Es ist die Aufgabe der Erfindung eine alternative Verspannanordnung für einen Antriebsstrang eines Kraftfahrzeugs zu schaffen. Es ist insbesondere die Aufgabe der Erfindung eine Verspannanordnung für einen Antriebsstrang eines Kraftfahrzeugs zu schaffen, die leichter montiert und/oder eine Bauraumreduzierung in axialer Richtung ermöglicht.

Die Lösung der Aufgabe erfolgt erfindungsgemäß durch eine Verspannanordnung mit den Merkmalen des Anspruchs 1. Bevorzugte Ausgestaltungen der Erfindung sind in den Unteransprüchen angegeben.

Eine erfindungsgemäße Verspannanordnung für einen Antriebsstrang eines Kraftfahrzeugs zum Vorspannen in Unfangsrichtung einer Steckverbindung zwischen einer getriebeseitigen Untereinheit, insbesondere einem Kupplungsaggregat, beispielsweise Doppelkupplung, und einer motorseitigen Untereinheit, insbesondere einem Drehschwingungsdämpfer, beispielsweise Zweimassenschwungrad, weist einen Flansch, insbesondere Ausgangsflansch des Drehschwingungsdämpfers oder Eingangsflansch des Kupplungsaggregats auf, wobei der Flansch eine Profilierung zur Übertragung eines Drehmoments in Umfangsrichtung an ein Gegenprofil aufweist. Zusätzlich ist ein über ein erstes Ende mit dem Flansch befestigtes Federelement zur Bereitstellung einer Vorspannkraft in Umfangsrichtung von dem Flansch auf das Gegenprofil und ein mit einem zweiten Ende des Federelements verbundenes Verspannblech vorgesehen. Erfindungsgemäß stützt sich das Verspannblech im Wesentlichen auf radialer Höhe der Profilierung des Flansches in Umfangsrichtung über eine nur axial verlaufende Befestigungslasche an dem Gegenprofil ab.

Da die Befestigungslasche nur axial verläuft, sind abknickende Umbiegungen in Umfangsrichtung vermieden, so dass es nicht erforderlich ist einen Teil der Profilierung des Flansches in die Befestigungslasche einzufädeln, so dass die alternative Verspannanordnung leichter zu montieren ist. Hierbei wird die Erkenntnis ausgenutzt, dass es nicht zwingend erforderlich ist eine axiale Positionierung des Verspannblechs mit dem Flansch im Bereich der Profilierung vorzusehen, sondern dass die axiale Positionierung beispielsweise mit Hilfe eines in einer korrespondierenden Bogennut des Flansches geführten Abstandsbolzens, über den das Verspannblech mit dem Flansch in Umfangsrichtung relativ verdrehbar verliersicher verbunden sein kann, erfolgen kann. Auftretende Axialkräfte können dadurch großflächig zwischen dem Flansch und dem Verspannblech abgetragen werden, so dass es nicht erforderlich ist die Axialkräfte über kleine Flächen einer umgebogenen Befestigungslasche zu übertragen, so dass der Verschleiß reduziert ist und eine ungewollte plastische Verformung der Befestigungslasche unter starker Belastung vermieden ist. Ferner kann dadurch der für die axiale Positionierung des Verspannblechs mit dem Flansch vorgesehene Bauraum nach radial außen verlagert werden. Da die Befestigungslasche nur axial verläuft und nach Erreichung eines in der Gegenprofilierung ausgebildeten Zwischenraums keine weiteren abgewinkelten Verläufe aufweist, kann die Befestigungslasche als im Wesentlichen zweidimensionaler Körper mit einer dem Verspannblech entsprechenden Blechdicke ausgebildet sein. Beispielsweise kann die Befestigungslasche als radial abstehender Zahn einer Steckverzahnung ausgebildet sein. Insbesondere ist es nicht erforderlich das Verspannblech gegen die maximal hohe Gegenkraft des Federelements, insbesondere einer geraden Druckfeder, zu verdrehen, um das Verspannblech zusammen mit dem Flansch in das Gegenprofil einzusetzen. Es ist sogar möglich ein in Umfangsrichtung kleineres Federelement und/oder ein Federelement mit einer steileren Federkennlinie zu verwenden ohne die Montage zu erschweren. Die Verspannung erfolgt insbesondere zugseitig, so dass durch das Federelement im Wesentlichen lediglich im Schubbetrieb einer angeschlossenen Brennkraftmaschine auftretende Momente abgedeckt werden müssen.

Da die Verspannung der Profilierung zur Gegenprofilierung nicht motorseitig, beispielsweise am Ausgangsflansch eines Zweimassenschwungrads, sondern getriebeseitig, beispielsweise am Eingangsflansch eines Kupplungsaggregats erfolgt, kann der hierfür benötigte Bauraum in den Bereich der getriebeseitigen Untereinheit verlagert werden. Insbesondere ist es möglich Teile der Steckverbindung der alternativen Verspannanordnung radial innerhalb von Teilen des Kupplungsaggregats, beispielsweise radial innerhalb einer Anpressplatte des Kupplungsaggregats vorzusehen, wo noch ungenutzter Bauraum gefunden werden kann. Der axiale Bauraumbedarf kann dadurch reduziert werden. Ebenfalls ist es möglich den Flansch der motorseitigen Baueinheit, beispielsweise den Ausgangsflansch des Zweimassenschwungrads, dünner auszugestalten, da es nicht erforderlich ist im zur Steckverzahnung motorseitigen Bereich Aussparungen zur Anordnung und Führung des Federelements vorzusehen. Aufgrund der vermiedenen Aussparungen kann bei einer geringeren Dicke das gleiche oder sogar ein größeres Biegemoment übertragen werden. Der axiale Bauraumbedarf kann dadurch reduziert werden. Die Verspannung erfolgt insbesondere zugseitig, so dass durch das Federelement im Wesentlichen lediglich im Schubbetrieb einer angeschlossenen Brennkraftmaschine auftretende Momente abgedeckt werden müssen. Die Verspannanordnung kann insbesondere wie vorstehend beschrieben aus- und weitergebildet sein.

Insbesondere bilden die Profilierung und das Gegenprofil eine Steckverzahnung aus, wobei das Gegenprofil in Umfangsrichtung verteilte Zahnzwischenräume zur Aufnahme jeweils eines korrespondierenden Innenzahns des Flansches aufweist, wobei in mindestens einen Zahnzwischenraum die Befestigungslasche des Verspannblechs hineinragt, wobei in dem Zahnzwischenraum, in dem die Befestigungslasche hineinragt, ausschließlich die Befestigungslasche angeordnet ist. Durch die Befestigungslasche kann also ein ansonsten vorgesehener Zahn des Flansches ersetzt sein. Hierbei wird die Erkenntnis ausgenutzt, dass über die Koppelung des Flansches mit dem Verspannblech mit Hilfe des Federelements ein Verspannen in Umfangsrichtung auch dann gewährleistet ist, wenn der Zahn des Flansches und die Befestigungslasche nicht im selben Zahnzwischenraum vorgesehen sind. Dies ermöglicht es, die axiale Erstreckung des Zahns des Flansches und/oder der Befestigungslasche zu erhöhen, insbesondere über die gesamte axiale Erstreckung des Gegenprofils vorzusehen. Dies erhöht die Anlageflächen an dem Gegenprofil, so dass die Belastungen an den Anlageflächen reduziert und/oder die axiale Erstreckung der Steckverzahnung verringert werden kann.

Vorzugsweise ragt mindestens eine Befestigungslasche des Verspannblechs von einer ersten axialen Seite her in das Gegenprofil hinein und mindestens eine weitere Befestigungslasche des Verspannblechs von einer der ersten axialen Seite wegweisenden zweiten axialen Seite her in das Gegenprofil hinein. Dadurch können die an den Befestigungslaschen angreifenden Kräfte vergleichmäßigt werden, so dass insbesondere durch elastische Verformungen der Befestigungslasche auftretende Kippmomente an der Steckverbindung vermieden werden können.

Besonders bevorzugt ist die Befestigungslasche einstückig mit dem Verspannblech ausgeführt, wobei die Befestigungslasche insbesondere um eine im Wesentlichen tangential verlaufende Biegelinie und/oder eine im Wesentlichen radial verlaufende Biegelinie umgebogen ist. Die Befestigungslasche kann bei der Herstellung des Verspannblechs teilweise ausgestanzt und nachträglich durch spanloses Umformen ausgebildet werden. Insbesondere ist genau ein Umbiegen um genau eine Biegelinie bereits ausreichend, um auch bei einem blechförmigen Verspannblech mit vergleichweise geringer Dicke die Befestigungslasche über eine deutlich längere Strecke aus die Blechdicke des Verspannblechs in axialer Richtung erstrecken zu lassen.

Erfindungsgemäß ist der Flansch zwischen einem ersten Verspannblech und einem zweiten Verspannblech angeordnet, wobei das erste Verspannblech und das zweite Verspannblech über Abstandsbolzen drehfest miteinander verbunden sind und der Flansch in Umfangsrichtung relativ zu den Verspannblechen verdrehbar ist. Der mindestens eine Abstandsbolzen, vorzugsweise drei Abstandsbolzen, kann jeweils in einer zugeordneten Bogennut des Flansches angeordnet und insbesondere geführt sein, so dass der Flansch in Umfangsrichtung relativ zu den Verspannblechen begrenzt verdreht werden kann. Insbesondere bildet der Flansch für den jeweiligen Abstandsbolzen Anschläge in Umfangsrichtung aus, so dass eine zu starke Komprimierung und/oder Dehnung des Federelements vermieden werden kann. Ferner können die Verspannbleche für jeweils eine axiale Richtung eine flächige Anlagefläche ausbilden, um Axialkräfte des Flansches aufzunehmen und abtragen zu können.

Insbesondere weist der Flansch ein Flanschfenster und das Verspannblech ein Blechfenster auf, wobei das Federelement sowohl in dem Flanschfenster als auch in dem Blechfenster angeordnet ist. Das Federelement kann insbesondere mit einem Ende an dem Flanschfenster und mit dem anderen Ende an dem Blechfenster anliegen, so dass eine Koppelung mit einer Vorspannkraft zwischen dem Flansch und dem Verspannblech einfach vorgesehen werden kann. Es ist nicht erforderlich das Federelement axial außerhalb zum Flansch oder zum Verspannblech anzuordnen, so dass der axiale Bauraumbedarf entsprechend reduziert werden kann.

Vorzugsweise weist das Verspannblech einen axial abstehenden Führungsflügel zur Führung des Federelements auf, wobei sich der Führungsflügel insbesondere nur über einen Teil der Erstreckung des Federelements in Umfangsrichtung erstreckt. Durch die Führungsflügel kann das Federelement, insbesondere eine gerade Druckfeder, radial innen und/oder radial außen geführt sein, so dass das Federelement unter Belastung nicht unbeabsichtigt klemmt und/oder aus dem Flanschfenster oder dem Blechfenster herausgebogen wird. Da das Federelement insbesondere im Betrieb immer vorgespannt ist, ist es möglich die Erstreckung der Führungsflügel nicht über die gesamte Erstreckung des Blechfensters in Umfangsrichtung vorzusehen, sondern beispielsweise um den Federweg der Vorspannung zu reduzieren. Dies erleichtert es für die Führungsflügel eine geeignete konstruktive Ausgestaltung zu wählen, um die Führungsflügel einstückig mit dem Verspannblech auszugestalten und durch teilweises Ausstanzen und nachfolgendes spanloses Umbiegen aus dem Material des Verspannblechs auszubilden.

Besonders bevorzugt weist das Verspannblech im Bereich des Blechfensters eine zu der Außenkonturierung des Federelements korrespondierende Führungsschräge zur Führung des Federelements auf. Dadurch kann bereits eine Führung des Federelements, insbesondere eine gerade Druckfeder, über die Blechdicke des Verspannblechs erfolgen. Insbesondere ist die radiale Erstreckung des Blechfensters geringer als die radiale Erstreckung des Federelements, so dass das Federelement selbst ohne Führungsflügel verliersicher zwischen zwei Verspannblechen aufgenommen sein kann. Die axiale Erstreckung und der axiale Bauraumbedarf kann dadurch weiter reduziert werden.

Insbesondere bilden der Flansch und das Verspannblech eine lösbare Arretiereinrichtung zur Arretierung des Flansches in Umfangsrichtung relativ zum Verspannblech in einer Montageposition aus. Durch die Arretiereinrichtung können der Flansch und das Verspannblech in einer Position derart relativ zueinander arretiert werden, dass die Einheit aus Flansch und Verspannblech mit Spiel in das Gegenprofil einfach eingesetzt werden kann. Danach kann die Arretierung gelöst werden, indem beispielsweise eine in Umfangsrichtung anschlagende Arretierzunge plastisch weggebogen wird oder aufgrund einer Eigenspannung in axialer Richtung wegspringt, um die vorgesehene Relativbewegung in Umfangsrichtung zu ermöglichen. Dies kann sogar bei Inbetriebnahme der Verspannanordnung erfolgen aufgrund der im normalen Betrieb auftretenden Lastwechsel. Die Arretiereinrichtung kann insbesondere wie in WO 2007/000151 A2 beschrieben konstruktiv ausgestaltet sein, auf deren Inhalt hiermit als Teil der Erfindung Bezug genommen wird.

Die Erfindung betrifft ferner ein Kupplungsaggregat, insbesondere eine Doppelkupplung, das eine wie vorstehend beschriebene Verspannanordnung aufweist, wobei der Flansch der Verspannanordnung einen Eingangsflansch des Kupplungsaggregats ausbildet. Insbesondere kann der Flansch Teil eines Kupplungsdeckels und/oder Teil einer Gegendruckplatte des Kupplungsaggregats sein.

Die Erfindung betrifft ferner einen Drehschwingungsdämpfer, insbesondere Zweimassenschwungrad, das eine wie vorstehend beschriebene Verspannanordnung aufweist, wobei der Flansch der Verspannanordnung einen Ausgangsflansch des Drehschwingungsdämpfers ausbildet.

Die Erfindung betrifft ferner einen Antriebsstrang für ein Kraftfahrzeug mit einer mit einer Brennkraftmaschine verbindbaren Motorwelle, insbesondere Kurbelwelle, und einer mit einem Kraftfahrzeuggetriebe verbindbaren Getriebeeingangswelle, wobei die Motorwelle mit der Getriebeeingangswelle über eine Verspannanordnung kuppelbar ist, die wie vorstehend beschrieben aus- und weitergebildet sein kann. Vorzugsweise ist die Motorwelle mit einem Drehschwingungsdämpfer, insbesondere Zweimassenschwungrad, und die Getriebeeingangswelle mit einem Kupplungsaggregat, insbesondere Doppelkupplung, verbunden, wobei der Drehschwingungsdämpfer mit dem Kupplungsaggregat über die Verspannanordnung drehfest aber axial verschiebbar verbunden ist.

Nachfolgend wird die Erfindung unter Bezugnahme auf die anliegenden Zeichnungen anhand bevorzugter Ausführungsbeispiele exemplarisch erläutert. Es zeigen:
Fig. 1: eine schematische Schnittansicht einer erfindungsgemäßen Verspannanordnung,
Fig. 2: eine schematische Draufsicht der Verspannanordnung aus Fig. 1,
Fig. 3: eine schematische Schnittansicht der Verspannanordnung entlang der Linie Y-Y aus Fig. 2,
Fig. 4: eine schematische Schnittansicht der Verspannanordnung entlang der Linie X-X aus Fig. 2,
Fig. 5: eine schematische perspektivische Ansicht der Verspannanordnung aus Fig. 2,
Fig. 6: eine schematische perspektivische Detailansicht der Verspannanordnung aus Fig. 5,
Fig. 7: eine schematische perspektivische Ansicht einer alternativen erfindungsgemäßen Verspannanordnung,
Fig. 8: eine schematische perspektivische Detailansicht der Verspannanordnung aus Fig. 7,
Fig. 9: eine schematische Draufsicht eines Details der Verspannanordnung in einer ersten Ausführungsform,
Fig. 10: eine schematische Schnittansicht der Verspannanordnung aus Fig. 9,
Fig. 11: eine schematische Draufsicht eines Details der Verspannanordnung in einer zweiten Ausführungsform bei entspanntem Federelement,
Fig. 12: eine schematische Draufsicht eines Details der Verspannanordnung aus Fig. 11 mit komprimierten Federelement,
Fig. 13: eine schematische Schnittansicht der Verspannanordnung aus Fig. 11,
Fig. 14: eine schematische Draufsicht eines Details der Verspannanordnung in einer dritten Ausführungsform,
Fig. 15: eine schematische Schnittansicht der Verspannanordnung aus Fig. 14,
Fig. 16: eine schematische Draufsicht eines Details der Verspannanordnung in einer vierten Ausführungsform,
Fig. 17: eine schematische Schnittansicht der Verspannanordnung aus Fig. 16,
Fig. 18: eine schematische Draufsicht eines Details der Verspannanordnung aus Fig. 2,
Fig. 19: eine schematische Schnittansicht der Verspannanordnung aus Fig. 18,
Fig. 20: eine schematische Draufsicht der Verspannanordnung aus Fig. 2 in einer arretierten Relativlage,
Fig. 21: eine schematische Draufsicht eines Details der Verspannanordnung aus Fig. 20,
Fig. 22: eine schematische Draufsicht der Verspannanordnung aus Fig. 2 in einer zugseitig verspannten Relativlage,
Fig. 23: eine schematische Draufsicht eines Details der Verspannanordnung aus Fig. 22,
Fig. 24: eine schematische Draufsicht der Verspannanordnung aus Fig. 2 in einer schubseitig verspannten Relativlage,
Fig. 25: eine schematische Draufsicht eines Details der Verspannanordnung aus Fig. 24 und
Fig. 26: eine schematische Schnittansicht einer alternativen erfindungsgemäßen Verspannanordnung.

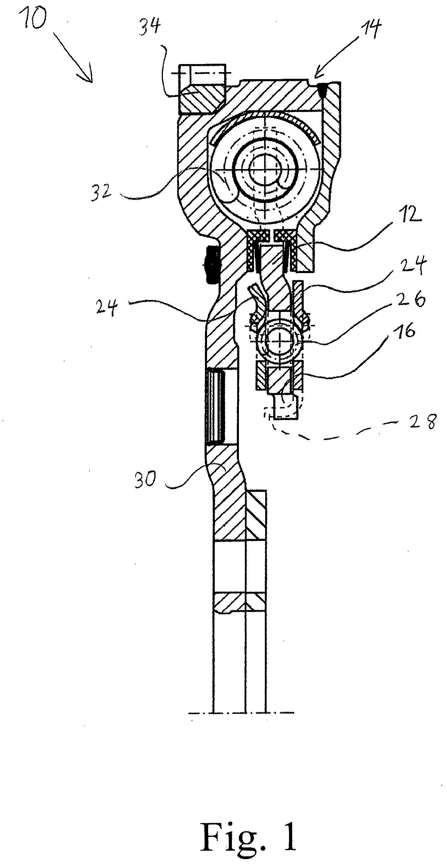

Die in Fig. 1 teilweise dargestellte Verspannanordnung 10 weist einen durch einen Ausgangsflansch 12 eines Zweimassenschwungrads 14 ausgebildeten Flansch auf, der radial innen eine Profilierung 16 aufweist. Die Profilierung 16 kann mit Spiel drehfest aber axial verschiebbar in ein korrespondierendes Gegenprofil 18 eines Eingangsflansches 20 eines Kupplungsaggregats 22 eingesetzt werden. Der Ausgangsflansch 12 ist zwischen zwei Verspannblechen 24 angeordnet und über ein Federelement 26 in Form einer Druckfeder, die beispielsweise bogen- bzw. teilbogenförmig, aber vorzugsweise gerade ausgebildet sein kann, mit den Verspannblechen 24 gegen die Federkraft des Federelements 26 in Umfangsrichtung begrenzt verdrehbar. Um das Spiel zwischen der Profilierung 16 des Ausgangsflansch 12 und dem Gegenprofil 18 auszugleichen, weist das jeweilige Verspannblech 24 jeweils eine Befestigungslasche 28 oder mehrere Befestigungslaschen 28 auf, die einstückig mit dem Verspannblech 24 ausgebildet sind und im Wesentlichen nur axial verlaufend umgebogen sind. Durch die Federkraft des Federelements 26 kann das Gegenprofil 18 mit der Profilierung 16 und der Befestigungslasche 28 spielfrei verspannt werden, um Geräuschentwicklungen bei Lastwechseln zu vermeiden.

Das Zweimassenschwungrad 14 weist einen mit einer nicht dargestellten Motorwelle 29, insbesondere Kurbelwelle, einer Brennkraftmaschine eines Kraftfahrzeugs verbindbaren Primärflansch 30 auf, der über ein Energiespeicherelement in Form einer Bogenfeder 32 begrenzt verdrehbar gekoppelt ist. Mit dem Primärflansch 30 ist ferner ein Starterkranz 36 verbunden, um über den Primärflansch 30 mit Hilfe eines Starters die Brennkraftmaschine starten zu können.

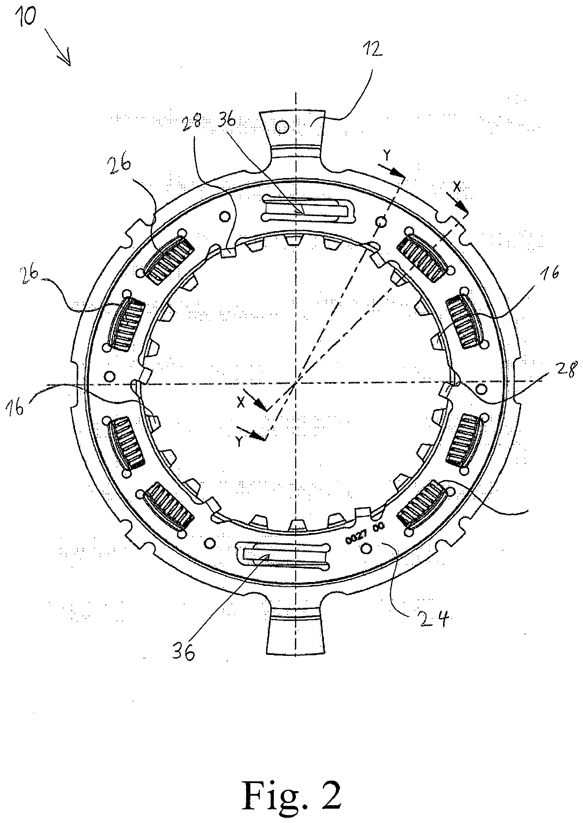

Wie in Fig. 2, Fig. 3 und Fig. 4 dargestellt, kann die Profilierung 16 des Ausgangsflanschs 12 als Verzahnung ausgebildet sein, um mit dem ebenfalls als Verzahnung ausgestalteten Gegenprofil 18 eine Steckverzahnung auszubilden. In regelmäßigen Abständen ist jedoch ein Zahn der Profilierung 16 durch die Befestigungslasche 28 ersetzt. Zur Montage der Verspannanordnung 10 kann der Ausgangsflansch 12 mit durch die Federelemente 26 bereitgestellter Vorspannung in einer Relativlage zu dem Verspannblech 24 mit Hilfe einer Arretiereinrichtung 36 derart positioniert werden, dass die Lage der Befestigungslaschen im Wesentlichen der Lage eines Zahns der Profilierung 16 entsprechen würde, wenn die Verzahnung der Profilierung 16 regelmäßig wäre. Dadurch kann der Ausgangsflansch 12 zusammen mit dem Verspannblech 24 mit Spiel auf das Gegenprofil 18 aufgesteckt werden. Danach kann die Arretierung der Arretiereinrichtung 36 gelöst werden, um zum Spielausgleich eine Vorspannung in Umfangsrichtung bereitzustellen.

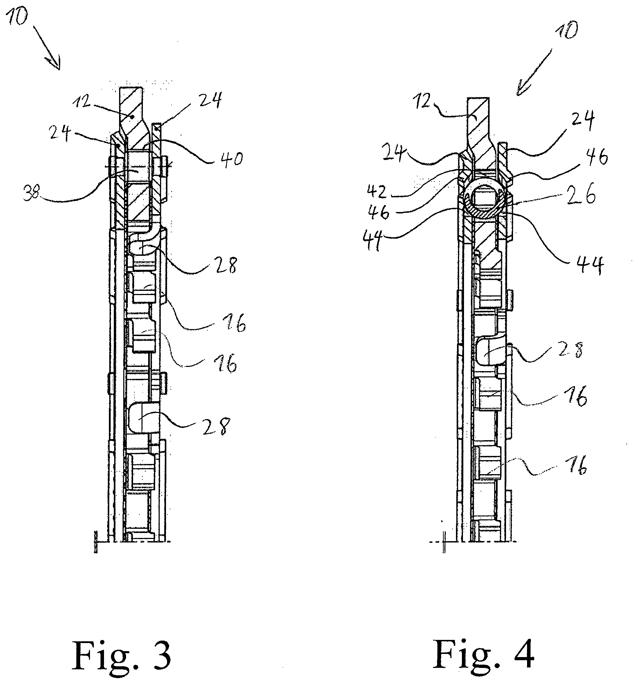

Wie in Fig. 3 dargestellt, können die Verspannbleche 24 über Abstandsbolzen 38 in einem definierten Abstand miteinander verbunden sein. Die Abstandsbolzen 38 können in einer Bogennut 40 des Ausgangsflanschs 12 begrenzt verdrehbar geführt sein. Wie in Fig. 4 dargestellt weist der Ausgangsflansch 12 ein Flanschfenster 42 zur Aufnahme des Federelements 26 auf. Entsprechend weisen die Verspannbleche 24 ein Blechfenster 44 zur Aufnahme des Federelements 26 auf. Im dargestellten Ausführungsbeispiel steht von dem Verspannblech 24 am radial äußeren Rand des Blechfensters 44 in axialer Richtung ein Führungsflügel 46 zur Führung des Federelements 26 ab.

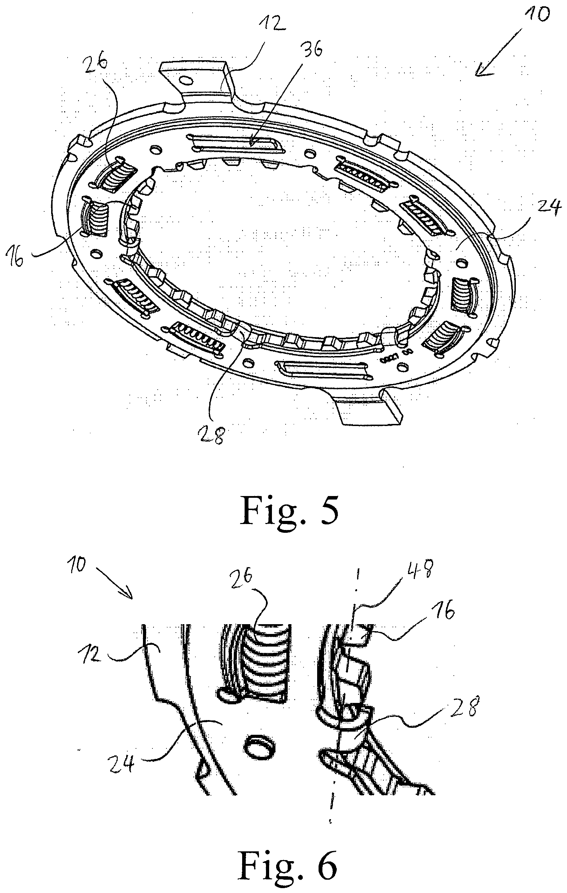

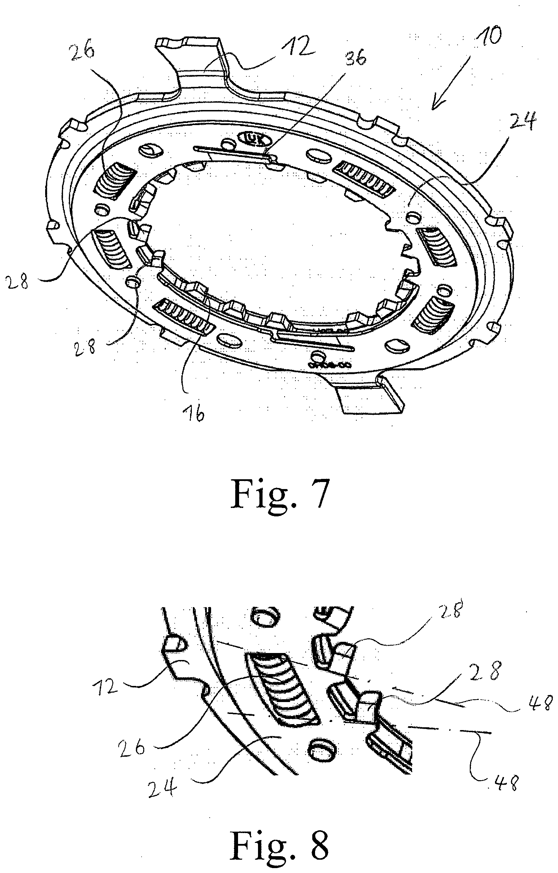

Wie in Fig. 5 und Fig. 6 dargestellt, kann die Befestigungslasche 28 dadurch ausgebildet werden, dass ein nach radial innen abstehender Teil des Verspannblechs 24 um eine im Wesentlichen tangential verlaufende Biegelinie 48 im Wesentlichen um 90° umgebogen wird. Wie in Fig. 7 und Fig. 8 dargestellt kann die Befestigungslasche 28 alternativ dadurch ausgebildet werden, dass ein im Wesentlichen in Umfangsrichtung oder tangential abstehender Teil des Verspannblechs 24 um eine im Wesentlichen radial verlaufende Biegelinie 48 umgebogen wird.

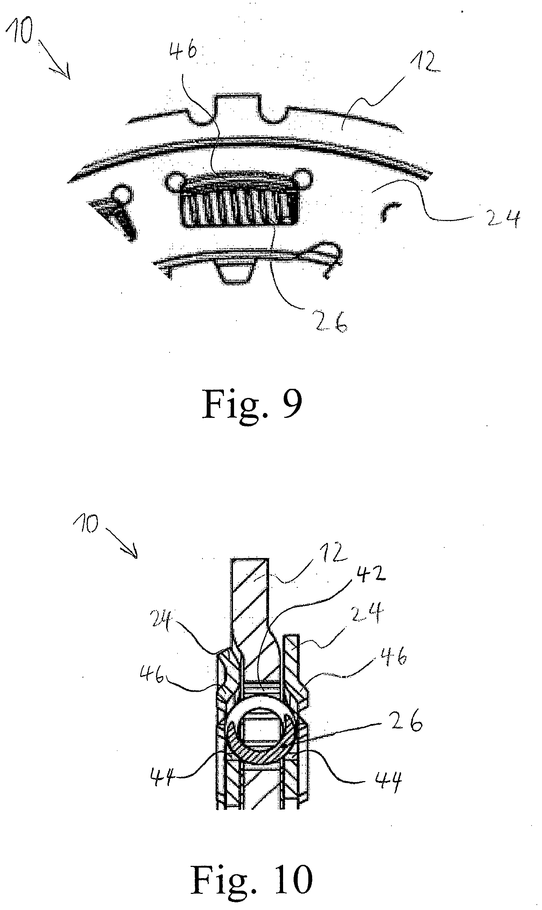

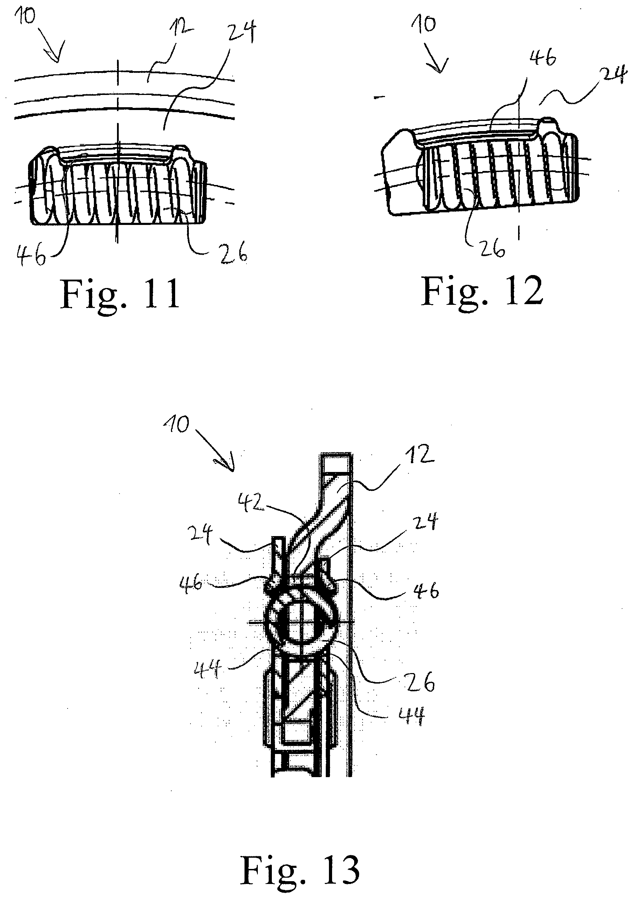

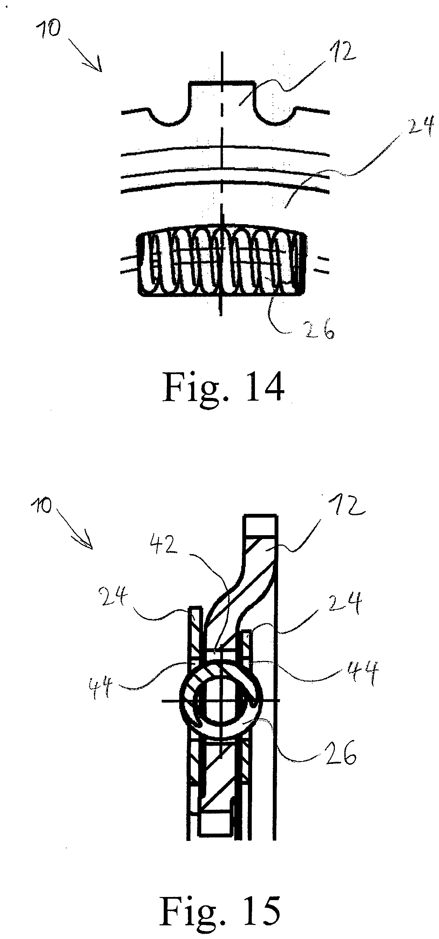

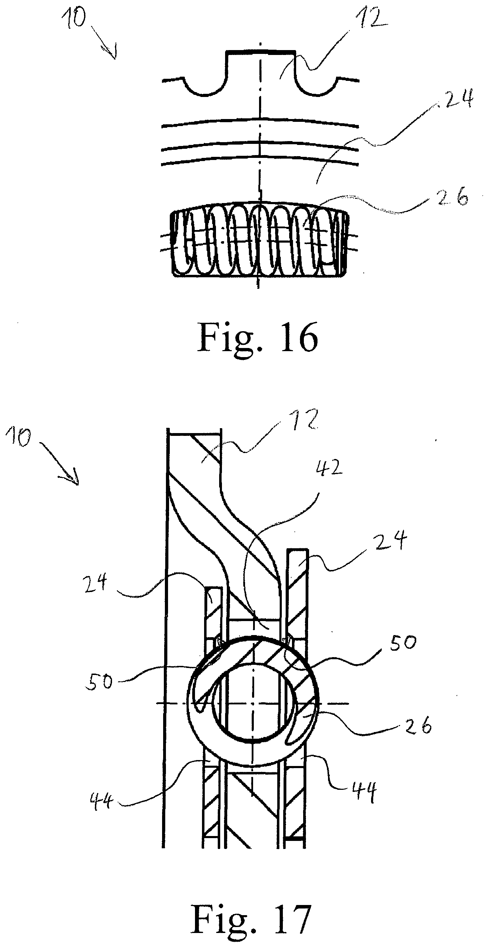

Wie in Fig. 9 und Fig. 10 dargestellt, kann sich der Führungsflügel 46 im Wesentlichen über die gesamte Erstreckung des Blechfensters 44 in Umfangsrichtung erstrecken. Wie in Fig. 11, Fig. 12 und Fig. 13 dargestellt, kann sich der Führungsflügel 46 alternativ nur in einem Teilbereich der Erstreckung des Blechfensters 44 in Umfangsrichtung erstrecken. Hierbei wird die Erkenntnis ausgenutzt, dass das Federelement 26 nur im nicht montierten Zustand völlig entspannt ist (Fig. 11) und im montierten Zustand (Fig. 12) immer etwas vorgespannt ist. Daher kann der Führungsflügel 46 soweit in Umfangsrichtung verkürzt sein, dass lediglich im montierten Zustand bei komprimierten Federelement 26 eine Führung gegeben ist. Wie in Fig. 14 und Fig. 15 dargestellt, können die Führungsflügel sogar entfallen, um axialen Bauraum zu sparen. Insbesondere in diesem Fall kann, wie in Fig. 16 und Fig. 17 dargestellt, das Verspannblech 24 eine zu der Außenkonturierung des Federelements 26 korrespondierende Führungsschräge 50 aufweisen, um das Federelement 26 auch ohne Führungsflügel 46 führen zu können, wobei die Führungsschräge 50 radial außen und/oder radial innen am Blechfenster 44 vorgesehen sein kann.

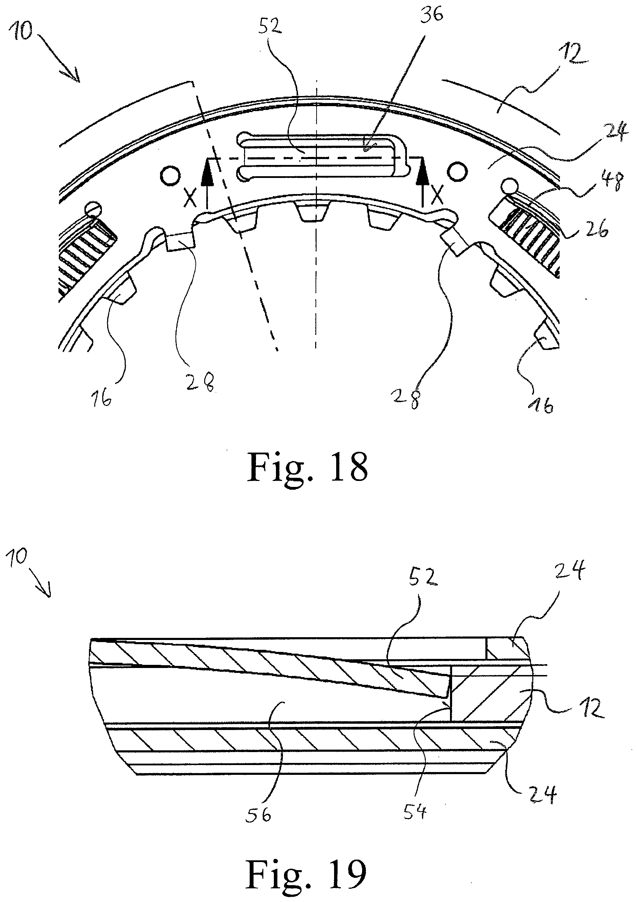

Wie in Fig. 18 und Fig. 19 dargestellt, kann die Arretiereinrichtung 36 eine Arretierzunge 52 aufweisen, die einstückig mit dem Verspannblech 24 ausgeführt ist und in Umfangsrichtung an einer Begrenzungswand 54 einer in dem Ausgangsflansch 12 vorgesehenen Arretieröffnung 56 anschlägt. Eine entsprechende Haltekraft in Umfangsrichtung kann durch das vorgespannte Federelement 26 bereit gestellt werden. Es ist auch möglich, dass die Arretierzunge 52 von dem Ausgangsflansch 12 und die Arretieröffnung 56 von dem Verspannblech 24 ausgebildet ist.

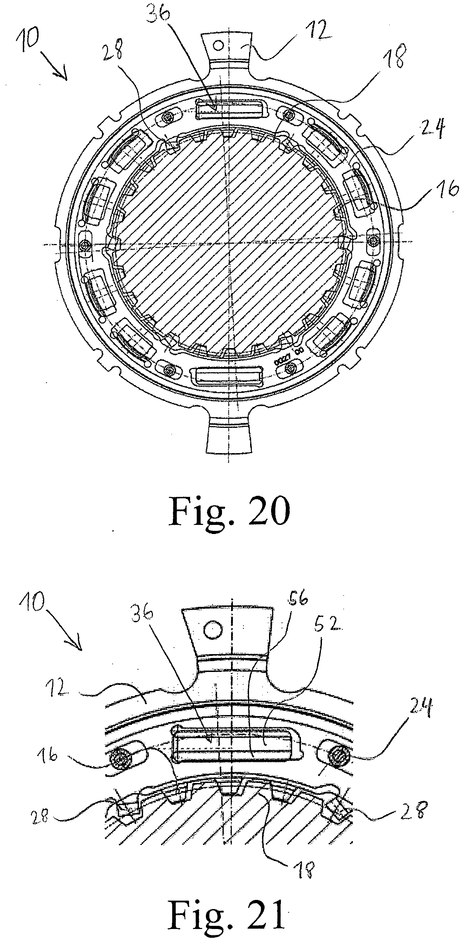

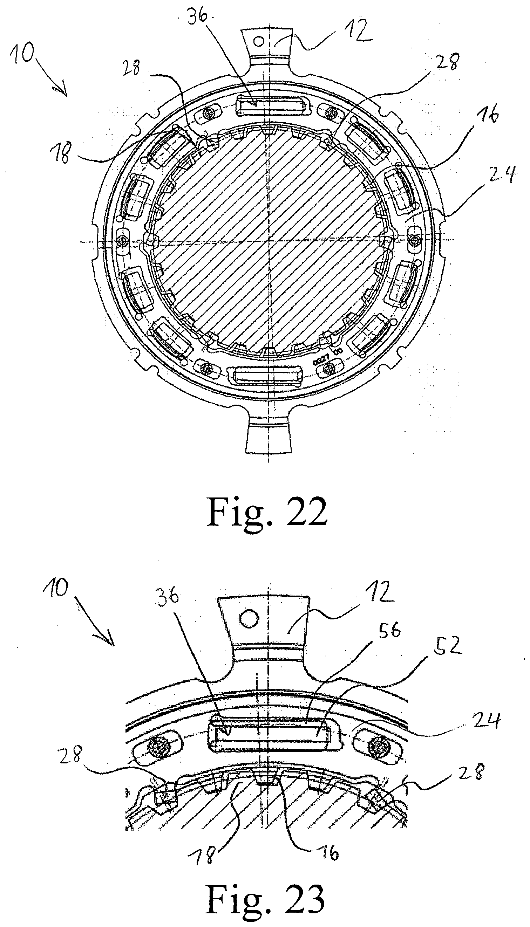

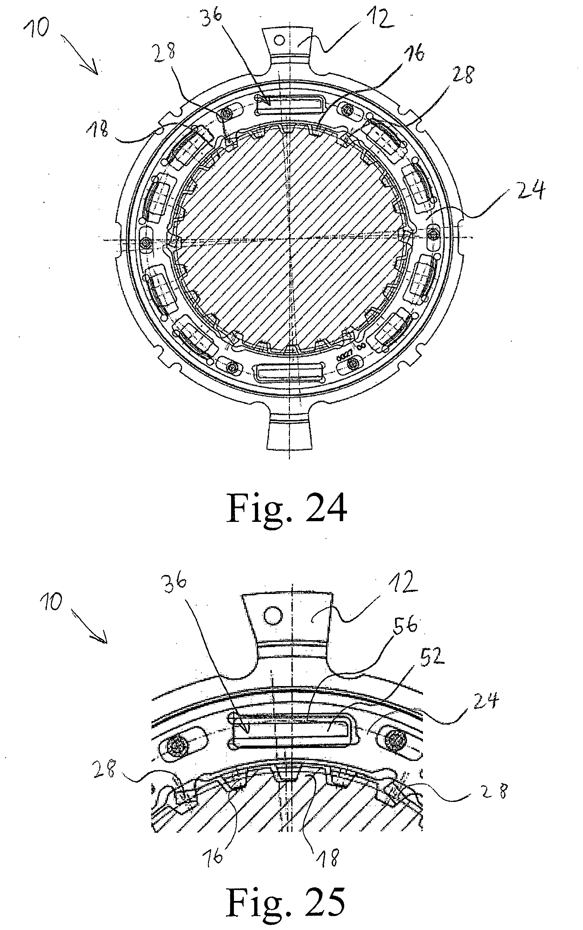

Im in Fig. 20 und Fig. 21 dargestellten arretierten Zustand der Verspannanordnung 10 ist die Profilierung 16 und die Befestigungslasche 28 mit Spiel in dem Gegenprofil 18 eingesetzt. In diesem Zustand ist die Arretierzunge 52 in die Arretieröffnung 56 hineingebogen. Im in Fig. 22 und Fig. 23 dargestellten Zugbetrieb ist die Arretiereinrichtung 36 gelöst, indem die Arretierzunge 52 aus der Arretieröffnung 56 herausbewegt wurde und im Wesentlichen parallel zum Ausgangsflansch 12 angeordnet ist. Im Zugbetrieb liegen aufgrund der Vorspannung des Federelements 26 die Befestigungslasche 28 und die Profilierung 16 in unterschiedlichen Umfangsrichtungen an dem Gegenprofil 18 an, so dass ein zuvor vorhandenes Spiel eliminiert ist. Im in Fig. 24 und Fig. 25 dargestellten Schubbetrieb können die Profilierung 16 und die Befestigungslasche 28 in gleichen Umfangsrichtungen an dem Gegenprofil 18 anliegen.

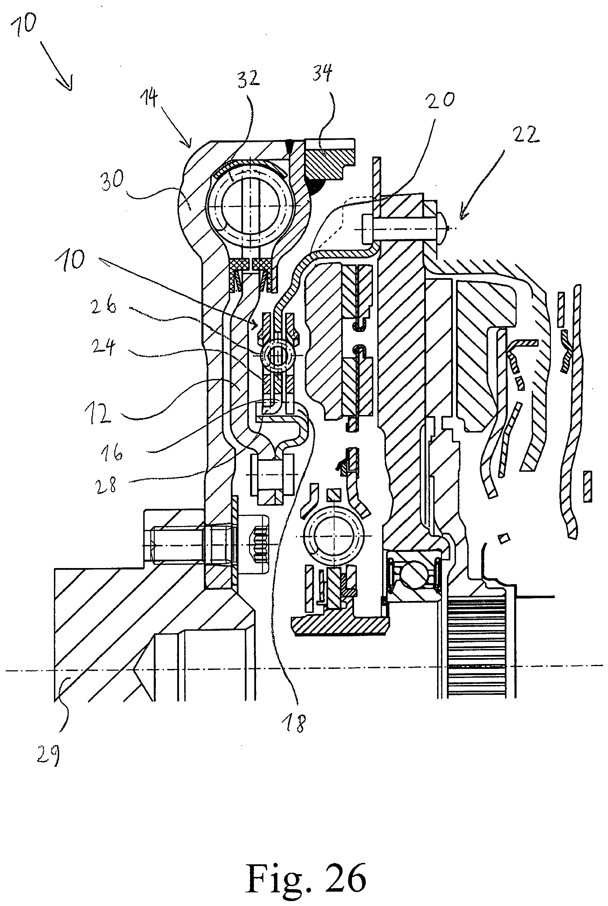

Bei der in Fig. 26 dargestellten Ausführungsform der Verspannanordnung 10 ist im Vergleich zu der in Fig. 1 dargestellten Verspannanordnung 10 der Flansch der Verspannanordnung 10 nicht durch den Ausgangsflansch 12 des Zweimassenschwungrads 14 sondern durch einen als Mitnehmerblech ausgestalteten Eingangsflansch 20 eines als Doppelkupplung ausgestalteten Kupplungsaggregats 22 ausgebildet. In Kraftflussrichtung liegt also erst die durch Profilierung 16 und Gegenprofil 18 ausgebildete Steckverbindung vor dem Federelement 26 der Verspanneinrichtung 10, während bei der in Fig. 1 dargestellten Ausführungsform der Verspanneinrichtung 10 die Reihenfolge umgekehrt ist.

### Bezuaszeichenliste

- 10: Verspannanordnung
- 12: Ausgangsflansch
- 14: Zweimassenschwungrad
- 16: Profilierung
- 18: Gegenprofil
- 20: Eingangsflansch
- 22: Kupplungsaggregat
- 24: Verspannblech
- 26: Federelement
- 28: Befestigungslasche
- 29: Motorwelle
- 30: Primärflansch
- 32: Bogenfeder
- 34: Starterkranz
- 36: Arretiereinrichtung
- 38: Abstandsbolzen
- 40: Bogennut
- 42: Flanschfenster
- 44: Blechfenster
- 46: Führungsflügel
- 48: Biegelinie
- 50: Führungsschräge
- 52: Arretierzunge
- 54: Begrenzungswand
- 56: Arretieröffnung

## Patentansprüche

1. Verspannanordnung für einen Antriebsstrang eines Kraftfahrzeugs zum Vorspannen in Unfangsrichtung einer Steckverbindung zwischen einer getriebeseitigen Untereinheit, insbesondere einem Kupplungsaggregat (22), beispielsweise Doppelkupplung, und einer motorseitigen Untereinheit, insbesondere einem Drehschwingungsdämpfer, beispielsweise Zweimassenschwungrad (14), mit
einem Flansch, insbesondere Ausgangsflansch (12) des Drehschwingungsdämpfers (14) oder Eingangsflansch (20) des Kupplungsaggregats (22), wobei der Flansch (12, 20) eine Profilierung (16) zur Übertragung eines Drehmoments in Umfangsrichtung an ein Gegenprofil (18) aufweist,
einem über ein erstes Ende mit dem Flansch (12, 20) befestigten Federelement (26) zur Bereitstellung einer Vorspannkraft in Umfangsrichtung von dem Flansch (12, 20) auf das Gegenprofil (18) und
einem mit einem zweiten Ende des Federelements (26) verbundenen Verspannblech (24),
wobei sich das Verspannblech (24) im Wesentlichen auf radialer Höhe der Profilierung (16) des Flansches (12, 20) in Umfangsrichtung über eine nur axial verlaufende Befestigungslasche (28) an dem Gegenprofil (18) abstützt
**dadurch gekennzeichnet, dass**
der Flansch (12, 20) zwischen einem ersten Verspannblech (24) und einem zweiten Verspannblech (24) angeordnet ist, wobei das erste Verspannblech (24) und,
dass das zweite Verspannblech (24) über Abstandsbolzen (38) drehfest miteinander verbunden sind und der Flansch (12, 20) in Umfangsrichtung relativ zu den Verspannblechen (24) verdrehbar ist.

2. Verspannanordnung nach Anspruch 1 **dadurch gekennzeichnet, dass** die Profilierung (16) und das Gegenprofil (18) eine Steckverzahnung ausbilden, wobei das Gegenprofil (18) in Umfangsrichtung verteilte Zahnzwischenräume zur Aufnahme jeweils eines korrespondierenden Innenzahns des Flansches (12, 20) aufweist, wobei in mindestens einen Zahnzwischenraum die Befestigungslasche (28) des Verspannblechs (24) hineinragt, wobei in dem Zahnzwischenraum, in dem die Befestigungslasche (24) hineinragt, ausschließlich die Befestigungslasche (28) angeordnet ist.

3. Verspannanordnung nach Anspruch 1 oder 2 **dadurch gekennzeichnet, dass** mindestens eine Befestigungslasche (28) des Verspannblechs (24) von einer ersten axialen Seite her in das Gegenprofil (18) hineinragt und mindestens eine weitere Befestigungslasche (28) des Verspannblechs (24) von einer der ersten axialen Seite wegweisenden zweiten axialen Seite her in das Gegenprofil (18) hineinragt.

4. Verspannanordnung nach einem der Ansprüche 1 bis 3 **dadurch gekennzeichnet, dass** die Befestigungslasche (28) einstückig mit dem Verspannblech (24) ausgeführt ist, wobei die Befestigungslasche (28) insbesondere um eine im Wesentlichen tangential verlaufende Biegelinie (48) und/oder eine im Wesentlichen radial verlaufende Biegelinie (48) umgebogen ist.

5. Verspannanordnung nach einem der Ansprüche 1 bis 4 **dadurch gekennzeichnet, dass** der Flansch (12, 20) ein Flanschfenster (42) und das Verspannblech (24) ein Blechfenster (44) aufweist, wobei das Federelement (26) sowohl in dem Flanschfenster (42) als auch in dem Blechfenster (44) angeordnet ist.

6. Verspannanordnung nach Anspruch 5 **dadurch gekennzeichnet, dass** das Verspannblech (24) einen axial abstehenden Führungsflügel (46) zur Führung des Federelements (26) aufweist, wobei sich der Führungsflügel (46) insbesondere nur über einen Teil der Erstreckung des Federelements (26) in Umfangsrichtung erstreckt.

7. Verspannanordnung nach Anspruch 5 oder 6 **dadurch gekennzeichnet, dass** das Verspannblech (24) im Bereich des Blechfensters (44) eine zu der Außenkonturierung des Federelements (26) korrespondierende Führungsschräge (50) zur Führung des Federelements (26) aufweist.

8. Verspannanordnung nach einem der Ansprüche 1 bis 7 **dadurch gekennzeichnet, dass** der Flansch (12, 20) und das Verspannblech (24) eine lösbare Arretiereinrichtung (36) zur Arretierung des Flansches (12, 20) in Umfangsrichtung relativ zum Verspannblech (24) in einer Montageposition ausbilden.

## Claims

1. Bracing arrangement for a drive train of a motor vehicle for prestressing a plug-in connection in the circumferential direction between a transmission-side subunit, in particular a clutch assembly (22), for example a double clutch, and an engine-side subunit, in particular a torsional vibration damper, for example a dual mass flywheel (14), having
a flange, in particular an output flange (12) of the torsional vibration damper (14) or an input flange (20) of the clutch assembly (22), the flange (12, 20) having a profiling (16) for transmitting a torque in the circumferential direction to a corresponding profile (18),
a spring element (26) which is fastened via a first end to the flange (12, 20) for providing a prestressing force in the circumferential direction from the flange (12, 20) to the corresponding profile (18), and
a bracing plate (24) which is connected to a second end of the spring element (26),
the bracing plate (24) being supported in the circumferential direction via a fastening bracket (28) which runs only axially on the corresponding profile (18) substantially at the radial level of the profiling (16) of the flange (12, 20),
**characterized in that**
the flange (12, 20) is arranged between a first bracing plate (24) and a second bracing plate (24), wherein the first bracing plate (24) and **in that** the second bracing plate (24) are connected fixedly to one another so as to rotate together via spacer bolts (38), and the flange (12, 20) is rotatable in the circumferential direction relative to the bracing plates (24).

2. Bracing arrangement according to Claim 1, **characterized in that** the profiling (16) and the corresponding profile (18) form a spline system, the corresponding profile (18) having tooth spaces which are distributed in the circumferential direction for receiving in each case one corresponding inner tooth of the flange (12, 20), the fastening bracket (28) of the bracing plate (24) protruding into at least one tooth space, exclusively the fastening bracket (28) being arranged **in that** tooth space, into which the fastening bracket (24) protrudes.

3. Bracing arrangement according to Claim 1 or 2, **characterized in that** at least one fastening bracket (28) of the bracing plate (24) protrudes into the corresponding profile (18) from a first axial side, and at least one further fastening bracket (28) of the bracing plate (24) protrudes into the corresponding profile (18) from a second axial side which points away from the first axial side.

4. Bracing arrangement according to one of Claims 1 to 3, **characterized in that** the fastening bracket (28) is configured in one piece with the bracing plate (24), the fastening bracket (28) being bent, in particular, around a substantially tangentially running bending line (48) and/or a substantially radially running bending line (48) .

5. Bracing arrangement according to one of Claims 1 to 4, **characterized in that** the flange (12, 20) has a flange window (42) and the bracing plate (24) has a plate window (44), the spring element (26) being arranged both in the flange window (42) and in the plate window (44).

6. Bracing arrangement according to Claim 5, **characterized in that** the bracing plate (24) has an axially projecting guide vane (46) for guiding the spring element (26), the guide vane (46) extending in the circumferential direction, in particular, only over part of the extent of the spring element (26).

7. Bracing arrangement according to Claim 5 or 6, **characterized in that**, in the region of the plate window (44), the bracing plate (24) has a guide bevel (50) which corresponds to the outer contouring of the spring element (26), for guiding the spring element (26).

8. Bracing arrangement according to one of Claims 1 to 7, **characterized in that** the flange (12, 20) and the bracing plate (24) form a releasable locking device (36) for locking the flange (12, 20) in the circumferential direction relative to the bracing plate (24) in an assembled position.

## Revendications

1. Dispositif de mise sous tension pour une chaîne cinématique d'un véhicule à moteur pour la précontrainte dans la direction périphérique d'une liaison par enfichage entre une sous-unité située du côté de boîte de vitesses, notamment un groupe d'embrayage (22), par exemple un double embrayage, et une sous-unité du côté de moteur, notamment un amortisseur à oscillation tournante, par exemple un volant à deux masses (14), avec :
une bride, notamment une bride de sortie (12) de l'amortisseur à oscillation tournante (14) ou une bride d'entrée (20) du groupe d'embrayage (22), la bride (12, 20) comportant un profilage (16) pour la transmission d'un couple de rotation dans la direction circonférentielle au niveau d'un contre-profil (18) ;
un élément à ressort (26) fixé à la bride (12, 20) via une première extrémité pour la mise à disposition d'une force de précontrainte dans la direction circonférentielle en partant de la bride (12, 20), sur le contre-profil (18) ; et
une tôle de mise sous tension (24) reliée à une deuxième extrémité de l'élément à ressort (26) ;
la tôle de mise sous tension (24) s'appuyant contre le contre-profil (18) pour l'essentiel sur la hauteur radiale du profilage (16) de la bride (12, 20), dans la direction circonférentielle, via une bride de fixation (28) ne s'étendant que dans le plan axial ;
**caractérisé en ce que**
la bride (12, 20) est disposée entre une première tôle de mise sous tension (24) et une deuxième tôle de mise sous tension (24), la première tôle de mise sous tension (24) et la deuxième tôle de mise sous tension (24) étant reliées entre elles solidairement en rotation via les entretoises (38) et la bride (12, 20) pouvant tourner dans la direction circonférentielle par rapport aux tôles de mise sous tension (24).

2. Dispositif de mise sous tension selon la revendication 1, **caractérisé en ce que** le profilage (16) et le contre-profil (18) forment un endentement enfiché, le contre-profil (18) comportant, dans la direction circonférentielle, des chambres intermédiaires dentées réparties pour loger respectivement une dent intérieure correspondante de la bride (12, 20), la bride de fixation (28) de la tôle de mise sous tension (24) rentrant dans au moins un espace intermédiaire denté, seule la bride de fixation (28) étant disposée dans l'espace intermédiaire denté dans lequel la bride de fixation (24) rentre.

3. Dispositif de mise sous tension selon la revendication 1 ou 2, **caractérisé en ce qu'**au moins une bride de fixation (28) de la tôle de mise sous tension (24) entre, en partant d'un premier côté axial, dans le contre-profil (18) et qu'au moins une bride de fixation (28) supplémentaire de la tôle de mise sous tension (24) rentre, en partant d'un deuxième côté axial s'écartant du premier côté axial, dans le contre-profil (18).

4. Dispositif de mise sous tension selon l'une quelconque des revendications 1 à 3, **caractérisé en ce que** la bride de fixation (28) est réalisée d'un seul tenant avec la tôle de mise sous tension (24), la bride de fixation (28) étant fléchie notamment selon une ligne de flexion (48) s'étendant pour l'essentiel tangentiellement et/ou selon une ligne de flexion (48) s'étendant pour l'essentiel dans le plan radial.

5. Dispositif de mise sous tension selon l'une quelconque des revendications 1 à 4, **caractérisé en ce que** la bride (12, 20) comporte une fenêtre de bride (42) et que la tôle de mise sous tension (24) comporte une fenêtre de tôle (44), l'élément à ressort (26) étant disposé tant dans la fenêtre de bride (42) que dans la fenêtre de tôle (44) .

6. Dispositif de mise sous tension selon la revendication 5, **caractérisé en ce que** la tôle de mise sous tension (24) comporte une aube de guidage (46) éloignée dans le plan axial pour guider l'élément à ressort (26), l'aube de guidage (46) ne s'étendant notamment que sur une partie du prolongement de l'élément à ressort (26) dans la direction circonférentielle.

7. Dispositif de mise sous tension selon la revendication 5 ou 6, **caractérisé en ce que** la tôle de mise sous tension (24) comporte dans la région de la fenêtre de tôle (44) une pente de guidage (50) correspondant au contour extérieur de l'élément à ressort (26) pour guider l'élément à ressort (26).

8. Dispositif de mise sous tension selon l'une quelconque des revendications 1 à 7, **caractérisé en ce que** la bride (12, 20) et la tôle de mise sous tension (24) forment un dispositif d'arrêt (36) amovible pour arrêter la bride (12, 20) dans la direction circonférentielle par rapport à la tôle de mise sous tension (24), dans une position de montage.
